# EUROPEAN PATENT APPLICATION

(11) **EP 1 935 320 A1**
(43) Date of publication of application: **25.06.2008**
(21) Application number: 06026577.4
(22) Date of filing: 21.12.2006
(51) Int. Cl.: A47L 15/50, D06F 39/12, D06F 37/26, A47L 15/42

(54) **Component for insertion into the wet space of a dishwashing machine or washing machine or clothes dryer**

(71) Applicant: Electrolux Home Products Corporation N.V., 1930 Zaventem (BE)
(72) Inventor: Breese, Kevin, 31020 San Fior (TV) (IT)
(74) Representative: Baumgartl, Gerhard Willi

(57) **Abstract**

Component for insertion into the wet space of a dishwashing machine or a washing machine or a clothes dryer, wherein it is consists of a first, inherently stable material (4, 10), at least partly covered by a second, highly flexible material (6, 11).

## Description

The invention concerns a component for insertion into the wet space of a dishwashing machine or a washing machine or a clothes dryer.

There is a growing design trend to have "soft-touch" features in appliances. Materials showing soft-touch characteristics are, for example, rubbers or thermoplastic elastomers having a low hardness. These materials, as a consequence of their desired low hardness, also have a low modulus of elasticity.

For the development of soft-touch components for use in the wet space of a household machine like a dishwasher or a washing machine, several aspects need to be taken into account. First of all, there are components where it is desired to have a soft-touch feel, yet the overall function of the component requires a higher modulus of elasticity. The component is exposed to high mechanical strains so that some known materials are not suitable to create such a component thereof. The second aspect to keep in mind is that the component will have to have performance up to 75°C or even 100°C and survive in a water and alkaline environment as well as strong surfactants. This mainly holds true for dishwashing machines and washing machines.

Research has focused mainly on finding a material, a component consisting of which showing all the features named above. Especially the problem of having a soft-touch feel while surviving mechanical strains and forces has not been solved satisfyingly. Most materials resistant to the hostile environment in a dishwasher, washing machine or clothes dryer are not mechanically suitable so that the choice of materials for the component is very limited.

It is the object of the current invention to provide a component of the type named above satisfying the requirements of mechanical performance and detergent resistance and having a soft-touch feel.

This goal is achieved by the provision of a component for insertion into the wet space of a dishwashing machine or a washing machine or a clothes dryer, which consists of a first, inherently stable material, at least partly covered by a second, highly flexible material.

The main idea of the current invention is to use two materials in the component, one mainly inner material for providing the required mechanical properties, and a second, outer material, providing the soft-touch feel and wear resistance in the washing or drying cycles. The higher flexibility, respectively elasticity, of the second material does not only cause the soft-touch feel giving assurance to the consumer that the dishware or the laundry is handled gently by the household machine, it also protects the goods washed or dried in the respective appliance. In summary, the component has the outer tactile soft-touch feel but the performance of a thermoplastic, thermoset, or even metal for the mechanical properties of the component. By having the mechanical properties realised by the first material, the selection of a suitable soft-touch material surviving the wet appliance environment is possible so that a greater choice of materials can be used.

To produce such a component out of two materials, where one highly flexible, elastic, soft-touch material forms the surface and covers or surrounds a relatively inflexible, stiffer, inherently stable material, several methods can be used.

The first possibility is a component, the materials of which being formed in different production processes and are either glued together or put together and, especially by means of cohesion supporting shaping, fitting perfectly. The separately produced parts of the component can be glued together by any suitable adhesive, which should be waterproof and alkali resistant. Another option is to mechanically couple the two parts. An example of such an embodiment is that the two parts, one consisting of the first material and the other consisting of the second material, are snap-fitted together. In such construction, the part made of the first material can be inserted into the part made of the second material, where the second material can have, e.g. a collar preventing the part made of the first material to fall out.

A second embodiment of the invention has the component produced by an overmolding process. In such a process, the inner part consisting of the first material is produced in a first step using methods known in the art such as injection molding and is subsequently inserted into a mold where the soft-touch second material is molded over it.

In a third embodiment, the component is produced by two component injection molding, often also called 2K molding. 2K molding uses one mold to allow both materials to be molded nearly at the same time. To this end, a more complicated mold is used, which can be turned or rotated to provide for the molding of the second material over the first material. This method is less time consuming and requires only one facility to be used.

The first material can be a thermoplastic or a thermoset. Suitable thermoplastic materials include polypropylene, polypropylene filled with inorganics such as talc, glassfiber and calcium carbonate, polyacetal or polyamide. Also, almost any thermoset can be used. In another embodiment, the first material can even be a metal.

The second material can be any suitable rubber or a thermoplastic elastomer (TPE). As TPE, almost any class can be used, including styrene type TPE's, elastomer alloys, polyurethanes, polyesters, polyetheramides or polyolefins.

In an especially advantageous embodiment, the first material can have, at least partly, a shape allowing elastic deformation. The use of two materials has the advantage of an increased freedom of mechanical design inside the component. While the first material may have certain shapes improving mechanical properties, the outer look and feel of the component remains aesthetically pleasing, suitable for use and bears no safety hazards, because the surface is formed by the second material. The outer shape, i.e. the surface, can remain smooth without nooks or crevices for trapping dirt.

Such a shape allowing elastic deformation can be realised if the first material has the shape of a spring and/or has kinks and/or is tapered. These features can for example be used to construct fingers protruding from the component which should have certain flexibility. Methods of molding, for example, a spring shape are known in the art. To create fingers with a decreasing radius the first material can partly have the shape of a coil spring and be tapered, such that the coils spring reduces its radius with protruding height. Also, kinks can be added. An example would be a flat mat for placement inside the dish basket having fingers protruding therefrom. In this case, the first material may only be present in the fingers, but it is also possible to have a flat design of a first material in the flat area of such a mat.

When the first material is at least partly shaped as a coil spring, it is advantageous to only cover the outside of the spring with the second material while leaving the inside of the spring free of materials. In this manner, more of the mechanical properties of the spring are conserved.

Preferably, the second material can be transparent. This allows a viewer to see the inner, first material, embedded into the second material, so that a high-tech look is achieved. This is especially advantageous if the first material is, at least partly, shaped to allow elastic deformation, for example as a spring.

A component according to the invention can be any component inserted into the wet space of a dishwashing machine, a washing machine or a clothes dryer, where "inserted" also includes components inserted during a construction. Examples include, but are not limited to, a dish basket, an insertable mat, especially to be placed inside a dish basket, an access cover of a detergent reservoir, a cutlery basket, a spraying rotor, a spraying rotor holder, a protective insert for clothes or dishes, and an inner door panel.

Further advantages and details of the current invention can be taken from the following details description and the accompanying drawings. In the drawings:
- Fig. 1: is a perspective view of a cutlery basket as a component according to the present invention,
- Fig. 2: is a sectional view of a mat for placement in a dish basket of a dishwasher, resembling a second embodiment of a component according to the current invention, and
- Fig. 3: is a schematic drawing illustrating a mold for the production of springs by molding.

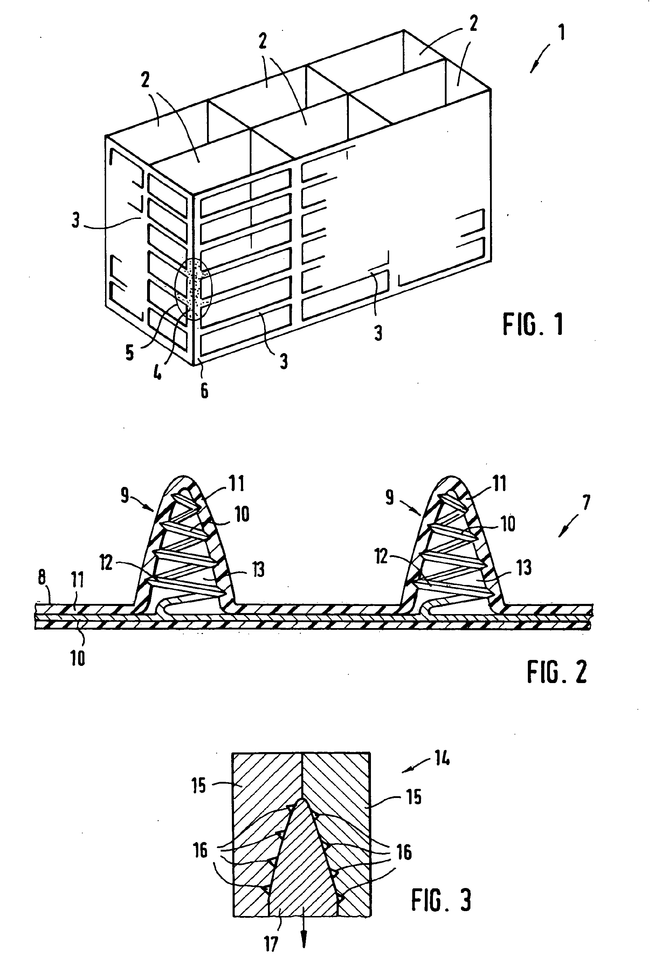

Fig. 1 shows a cutlery basket 1, which is used inside the wet space of a dishwashing machine. It comprises six chambers 2 for receiving cutlery through an opening on the upper side. The chamber walls are formed of grid structure 3.

The cutlery basket is inherently stable due to the use of a first, essentially non-flexible material 4 which is indicated by the dashed line in the area 5 and covered by a second material 6 forming the surface of the cutlery basket 1. In summary, the cutlery basket 1 consists of a first material 4 covered by a second material 6, where the first material has a high modulus of elasticity.

The first material 4 is a thermoplastic in this example, but may also be a thermoset or even a metal. It is inherently stable and determines the shape of the cutlery basket 1 and essentially its mechanical properties. The second material 6, in this case a TPE, is highly flexible, respectively elastic, and has a soft-touch feel as well as being suited for use in a hot, water and alkaline-filled environment. In this manner, cutlery is stored soft and save and the user is assured of a gentle handling of the cutlery in the dishwashing machine.

Fig. 2 is a sectional view of a mat 7 for placement inside the dish basket of a dishwashing machine. It comprises a flat, planar supporting lower surface 8 having through holes to facilitate water circulation (not shown) and fingers 9 protruding from the surface 8 in a regular pattern. These fingers serve to support dishes placed on the mat and to prevent the dishes from sliding.

Again, the mat 7 consists of a first material 10 covered partly by a second material 11. The first material, which in this case is a thermoplastic, but can also be a thermoset or metal, is inherently stable and essentially defines the shape of the mat 7. As can be seen from fig. 2, the first material 10 also extends under the flat surface 8, but one can also think of an embodiment where the first material 10 is only contained in the fingers 9. The result would be a mat 7 having a more flexible surface 8.

The second material 11 is an elastic TPE with a soft-touch feel and good suitability for the environment in a wet space. It covers the whole surface of the mat 7. It provides a gentle-to-touch surface and protects dishes placed on the mat 7.

In the region of the protruding fingers the first material 10 has the shape of a coil spring 12 whose radius decreases with increasing height. This results in a tapered outline of the first material 10 where it is shaped as the spring 12. As shown in fig. 2, only the outside of the spring 12 is covered by the second material 11, leaving the inside 13 of the spring free from material. In this manner, the mechanical properties of the spring are better conserved.

By forming, i.e. molding, the first material 10 into the shape of the coil spring 12, the mechanical properties of the fingers can be designed for specific requirements. Hence, the invention increases the freedom in the design of the mechanical properties. The behaviour of the fingers can also be influenced by including kinks into the shape of the first material 10.

The second material 11 is transparent, so that the structure of the coil springs 12 can be seen by the user. This allows a high-tech look of the mat 7.

Fig. 3 shows the cross section of a mold 14 used to produce the springs 12 of the mat 7. Two mold halves 15 with cavities 16 for forming the spring enclose a removable core 17 so that only the circumferential cavity 16 is filled by the first material which is molded into the spring shape. In this case, the cavity 16 is shown as having a triangular cross section, but also square, semi-circular or other cross sections are possible, depending on the mechanical requirements.

Generally speaking, the described components 1 and 7 can be produced by multible methods. Parts consisting of both materials may be formed in different production processes and subsequently assembled to form the component. The assembling may take place by glueing the parts together or by a snap-fit process. Another production option is an overmolding process, wherein the already molded first material is inserted into a mold and overmolded by the second material. A third usable method is two component injection molding, wherein only one mold rotatably mounted can be used to create the component.

## Claims

1. Component for insertion into the wet space of a dishwashing machine or a washing machine or a clothes dryer, **characterized in that** it is consists of a first, inherently stable material (4, 10), at least partly covered by a second, highly flexible material (6, 11).

2. Component according to claim 1, **characterized in that** the materials are formed in different production processes and are either glued together or put together and, especially by means of cohesion supporting shaping, fitting perfectly.

3. Component according to claim 1, **characterized in that** the component is produced by an overmolding process.

4. Component according to claim 1, **characterized in that** the component is produced by two component injection molding.

5. Component according to one of the preceding claims, **characterized in that** the first material (4, 10) is a thermoplastic, especially polypropylene, polypropylene filled with inorganics, polyacetal or polyamide, or a thermoset.

6. Component according to one of claims 1 to 4, **characterized in that** the first material (4, 10) is a metal.

7. Component according to one of the preceding claims, **characterized in that** the second material (6, 11) is a rubber or a thermoplastic elastomer.

8. Component according to one of the preceding claims, **characterized in that** the first material (4, 10) has, at least partly, a shape allowing elastic deformation.

9. Component according to claim 8, **characterized in that** the first material (4, 10) has the shape of a spring (12) and/or has kinks and/or is tapered.

10. Component according to claim 9, **characterized in that** a first material (10) shaped at least partly as a coil spring (12) is covered with the second material (11) on the outside of the spring (12) while the inside (13) of the spring (13) is free of material.

11. Component according to one of the preceding claims, **characterized in that** the second material (6, 11) is transparent.

12. Component according to one of the preceding claims, **characterized in that** it is a dish basket or an insertable mat (7), especially to be placed inside a dish basket, or an access cover of a detergent reservoir or a cutlery basket (1) or a spraying rotor or a spraying rotor holder or a protective insert for clothes or dishes or an inner door panel.
